# EUROPÄISCHE PATENTSCHRIFT

(11) **EP 3 061 641 B1**
(45) Veröffentlichungstag und Bekanntmachung des Hinweises auf die Patenterteilung: **14.03.2018**
(21) Anmeldenummer: 16000091.5
(22) Anmeldetag: 15.01.2016
(51) Int. Cl.: B60K 17/28, B60W 30/188, F02B 37/10, F02B 39/10

(54) **VERFAHREN UND VORRICHTUNG ZUR ANSTEUERUNG EINES ANTRIEBSSYSTEMS EINES KRAFTFAHRZEUGS MIT EINEM NEBENABTRIEB**
METHOD AND DEVICE FOR CONTROLLING A DRIVE SYSTEM OF A MOTOR VEHICLE WITH AN AUXILIARY DRIVE
PROCEDE ET DISPOSITIF DE COMMANDE D'UN SYSTEME D'ENTRAINEMENT D'UN VEHICULE AUTOMOBILE COMPRENANT UN ARBRE DE TRANSMISSION SECONDAIRE

(30) Priorität: 28.02.2015 DE 102015002596
(43) Veröffentlichungstag der Anmeldung: 31.08.2016
(73) Patentinhaber: MAN Truck & Bus AG, 80995 München (DE)
(72) Erfinder: Pappenheimer, Andreas, 91792 Ellingen (DE); Sommermann, Andreas, 91560 Heilsbronn (DE)
(74) Vertreter: v. Bezold & Partner Patentanwälte - PartG mbB

(56) Entgegenhaltungen:
- WO-A1-98/54449
- US-A1- 2007 006 572

## Beschreibung

Die Erfindung betrifft ein Verfahren zur Ansteuerung eines Antriebssystems eines Kraftfahrzeugs, insbesondere eines Nutzfahrzeugs, wobei das Antriebssystem eine durch einen elektrifizierten Abgasturbolader aufgeladene Brennkraftmaschine und einen motorseitigen oder getriebeseitigen Nebenabtrieb umfasst. Die Erfindung betrifft ferner eine Vorrichtung, die zur Durchführung eines solchen Verfahrens ausgeführt ist.

Aus der Praxis ist bekannt, dass Verbrennungsmotoren, in diesem Dokument auch allgemein als Brennkraftmaschinen bezeichnet, insbesondere Verbrennungsmotoren von Nutzfahrzeugen, einen oder mehrere Nebenabtriebe (engl. power take-off (PTO)), d. h. Möglichkeiten für den Anbau von Nebenaggregaten, aufweisen. Am Nebenabtrieb können Verbraucher wie Pumpen, Kompressoren oder ähnliche Nebenaggregate angeschlossen werden, die dann vom Verbrennungsmotor angetrieben werden. Insbesondere im Nutzfahrzeugbereich sind für bestimmte Anwendungen entsprechende Anbauten bzw. Abtriebe bereits vorgesehen, wie z. B. Klimakompressoren bei Busmotoren oder Kühlfahrzeugen oder große Generatoren zum Betrieb von Verbrauchern im Lastkraftwagen-Aufbau. Die bekannten Nebenabtriebe können als motorabhängige Nebenabtriebe (z. B. Transport-Betonmischer, Flugfeld-Löschfahrzeug) oder als kupplungsabhängige Nebenabtriebe (z. B. Tank- und Silofahrzeuge, Absetzkipper, Gelenkmastbühne) ausgeführt sein. Ein motorabhängiger Nebenabtrieb kann auch während der Fahrt zugeschaltet sein, während bei einem kupplungsabhängigen Nebenabtrieb dessen Zuschaltung nur bei stehendem Fahrzeug möglich ist.

Aus dem Stand der Technik sind Verfahren zur Ansteuerung eines Antriebssystems mit einem Nebenabtrieb bekannt.

So schlägt die Offenbarungsschrift EP 2 149 471 A1 beispielsweise ein Verfahren zum Ankoppeln eines Nebenabtriebes bei einem automatisierten Getriebe eines Fahrzeuges vor, bei dem nach der Anforderung des Ankoppelns des Nebenabtriebes die Erfüllung vorbestimmter Bedingungen überprüft wird und bei Erfüllung der vorbestimmten Bedingungen eine Aktorik zum Ankoppeln des Nebenabtriebes aktiviert wird, wobei die Aktorik zum Ankoppeln des Nebenabtriebes durch das Getriebesteuergerät angesteuert wird.

Aus der Druckschrift DE 10 2004 027 294 A1 ist ferner ein Verfahren und eine Anordnung zum Ankoppeln eines Nebenabtriebes bei einem Fahrzeug bekannt. Bei dem bekannten Verfahren wird zunächst ein Ankoppeln an den Nebenabtrieb angefordert und überprüft, ob vorbestimmte Bedingungen zum Ankoppeln an den Nebenabtrieb erfüllt sind oder nicht. Wenn alle vorbestimmten Bedingungen erfüllt sind, wird der Ankoppelvorgang an den Nebenabtrieb zugelassen. Wenn wenigstens eine der vorbestimmten Bedingungen nicht erfüllt ist, wird der Ankoppelvorgang abgelehnt. Der Ankoppelvorgang kann trotzdem zugelassen werden, wenn nach einem weiteren Anfordern des Ankoppelns nicht bestimmt werden kann, ob wenigstens eine Bedingung zum Durchführen des Ankoppelvorganges an den Nebenabtrieb erfüllt ist oder nicht.

Ferner sind aus der Druckschrift EP 1 672 236 A1 ein Verfahren und ein System zum Einlegen und Auslegen eines Nebenabtriebes bei einem Getriebe eines Fahrzeuges bekannt. Das System umfasst ein Bedienelement, welches durch den Fahrer betätigt werden kann, wenn er das Ankoppeln oder Abkoppeln des Nebenabtriebes wünscht. Des Weiteren ist ein Steuerpaneel vorgesehen, um den Fahrer mit Informationen über den Status des Nebenabtriebes zu informieren. Das Bedienelement ist mit einem Steuergerät verbunden, welches somit die Ansteuerung des Nebenabtriebes ermöglicht. Zudem ist eine Aktorik des Nebenabtriebes vorgesehen, welche einen Kupplungsmechanismus betätigt, um den Nebenabtrieb mit dem Antriebsstrang des Fahrzeuges zu koppeln. Zum Ansteuern der Aktorik ist diese mit dem Steuergerät des Nebenabtriebes verbunden.

Weitere Verfahren sind aus der DE 42 15 583 A1 oder der DE 10 2009 026 625 A1 bekannt. Bei den bekannten Verfahren wird jedoch nicht das technische Problem adressiert, dass Drehzahleinbrüche bei der Aktivierung bzw. Zuschaltung oder Lastanforderungsänderungen des Nebenabtriebs auftreten können, da das Zuschalten des Nebenabtriebs insbesondere bei Nutzfahrzeugen eine zusätzliche Lastanforderung bedeutet, welche bis hin zur Motorvolllast reichen kann (z. B. bei einer Betonpumpe oder bei Hydropumpenantrieben). Derartige Drehzahleinbrüche sind besonders bei motorabhängigen Nebenabtrieben störend, wenn diese im Fahrbetrieb auftreten. US 2007/006572 A offenbart die Steuerung einer aufgeladenen Brennkraftmaschine derart, dass das verfügbare Motormoment vor dem Zuschalten des Nebenabtriebs erhöht wird.

WO 98/54449 A offenbart einen elektrifizierten Abgasturbolader, der so gesteuert wird, dass die Brennkraftmaschine rechtzeitig auf hohe Lasten reagiert. Es ist somit eine Aufgabe der Erfindung, ein verbessertes Verfahren und eine verbesserte Vorrichtung zur Ansteuerung eines Antriebssystems eines Kraftfahrzeugs mit einer aufgeladenen Brennkraftmaschine und einen motorseitigen oder getriebeseitigen Nebenabtrieb bereitzustellen, mit denen Nachteile herkömmlicher Techniken vermieden werden können. Die Aufgabe der Erfindung ist es insbesondere, ein Verfahren bereitzustellen, mit dem ein nebenabtriebbedingter Drehzahleinbruch verhindert oder zumindest reduziert werden kann.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Erfindungsgemäß wird ein Verfahren zur Ansteuerung eines Antriebssystems eines Kraftfahrzeugs bereitgestellt, wobei das Antriebssystem eine durch einen elektrifizierten Abgasturbolader aufgeladene Brennkraftmaschine und einen motorseitigen oder getriebeseitigen Nebenabtrieb aufweist. Das Kraftfahrzeug ist vorzugsweise ein Nutzfahrzeug. Der Nebenabtrieb kann in an sich bekannter Weise als motorabhängiger oder kupplungsabhängiger Nebenabtrieb ausgeführt sein.

Ein elektrifizierter Abgasturbolader ist an sich aus dem Stand der Technik bekannt und wird auch als ein elektromotorisch betreibbarer bzw. elektromotorisch unterstützter Abgasturbolader bezeichnet. Der elektrifizierte Abgasturbolader wird zunehmend anstelle eines herkömmlichen Abgasturboladers eingesetzt und weist eine elektrische Maschine auf, die drehmomentübertragend mit der Antriebswelle des Abgasturboladers oder allgemein dem Läufer koppelbar bzw. gekoppelt ist. Die elektrische Maschine ist zum Antrieb bzw. zur Antriebsunterstützung des Abgasturboladers vorgesehen (nachfolgend auch als elektromotorischer Betrieb des Abgasturboladers bezeichnet) und/oder kann vom Abgasturbolader generatorisch betrieben werden. Der Läufer des Abgasturboladers ist aus der Abgasturbine, dem Verdichter und der Antriebswelle gebildet, wobei die Abgasturbine und der Verdichter über die Antriebswelle bewegungsgekoppelt sind. Aus der Praxis ist bereits bekannt, mit dem Elektromotor eines elektromotorisch unterstützten Abgasturboladers den Aufladeprozess der Brennkraftmaschine temporär zu unterstützen, insbesondere zur Überbrückung des sogenannten Turbolochs beim Anfahren.

Die Besonderheit der erfindungsgemäßen Lehre liegt darin, dass ein motorischer Betrieb des elektrifizierten Abgasturboladers in Abhängigkeit von einem Betriebszustand des Nebenabtriebs aktiviert wird, insbesondere um bei einer Zuschaltung des Nebenabtriebs und/oder Lastanforderung des Nebenabtriebs einen schnelleren Ladedruckaufbau zu erzielen. Vorstehend wurde bereits erwähnt, dass unter dem elektromotorischen Betrieb des Abgasturboladers der motorische Betrieb der am Abgasturbolader angekoppelten elektrischen Maschine verstanden wird, wodurch der Läufer des Abgasturboladers beschleunigt und der Ladedruck der Brennkraftmaschine schneller erhöht wird. Durch den schnelleren Ladedruckaufbau kann schneller eine größere Kraftstoffmenge eingespritzt werden, um schneller die durch den Nebenabtrieb angeforderte erhöhte Leistung bereitzustellen. Auf diese Weise können Drehzahleinbrüche vermieden oder zumindest reduziert werden.

Ein besonderer Vorzug der Erfindung liegt somit darin, dass die durch den Nebenabtrieb zusätzlich angeforderte Leistung durch den elektromotorischen Betrieb des elektrifizierten Abgasturboladers durch schnelleren Ladedruckaufbau schneller bereitgestellt wird und somit Drehzahleinbrüche aufgrund der zusätzlichen Lastanforderung des Nebenabtriebs vermieden oder zumindest reduziert werden können. Ein weiterer Vorteil liegt darin, dass mittels des elektromotorischen Betriebs des Abgasturboladers gezielt eine auf den Nebenabtrieb abgestimmte Ladedruckvorsteuerung erfolgen kann.

Betriebszustände des Nebenabtriebs, bei denen der elektromotorische Betrieb des elektrifizierten Abgasturboladers aktiviert wird, können beispielsweise Betriebszustände sein, die angeben, dass der Nebenabtrieb ein- bzw. zugeschaltet ist oder wird, oder Betriebszustände, bei denen die Lastanforderung und/oder der Lastanforderungsanstieg des Nebenabtriebs vorbestimmte Schwellenwerte überschritten hat oder überschreiten wird, was nachfolgend anhand bevorzugter Ausführungsbeispiele erläutert wird.

Gemäß einem ersten Ausführungsbeispiel wird der elektromotorische Betrieb des elektrifizierten Abgasturboladers aktiviert, wenn der Nebenabtrieb über ein Bedienelement eingeschaltet wird. Derartige Bedienelemente können bekanntermaßen beispielsweise im Fahrerhaus oder auch außen am Fahrzeug angeordnet sein und dort vom Fahrer zur Steuerung des Nebenabtriebs bedient werden. Der elektromotorische Betrieb des elektrifizierten Abgasturboladers kann gemäß diesem Ausführungsbeispiel wieder deaktiviert werden, wenn der Nebenabtrieb ausgeschaltet wird. Dieses Ausführungsbeispiel ist für Nebenabtriebe vorteilhaft, die nach Einschalten dauerhaft eine hohe Last anfordern, z. B. bei einem Betonmischer.

Bei einem zweiten Ausführungsbeispiel wird der elektromotorische Betrieb des elektrifizierten Abgasturboladers aktiviert, wenn eine Lastanforderung des Nebenabtriebs einen vorbestimmten Lastanforderungsschwellenwert überschreitet und/oder wenn eine Lastanforderung des Nebenabtriebs innerhalb einer vorbestimmten Zeitspanne um mehr als einen vorbestimmten Differenzschwellenwert ansteigt. Der Lastanforderungsschwellenwert stellt somit einen oberen Grenzwert der Lastanforderung des Nebenabtriebs ab, ab dem der unterstützende elektromotorische Betrieb des elektrifizierten Abgasturboladers eingesetzt wird. Der Differenzschwellenwert stellt dagegen einen Grenzwert für die Lastanforderungsänderung dar, so dass der elektromotorische Betrieb des elektrifizierten Abgasturboladers gemäß dieser Variante bei starken und schnellen Anstiegen der Lastanforderungen aktiviert wird. Der Lastanforderungsschwellenwert und der Differenzschwellenwert können beispielsweise experimentell auf diejenigen Werte festgelegt werden, ab denen ohne den elektromotorischen Betrieb des elektrifizierten Abgasturboladers signifikante Drehzahleinbrüche zu verzeichnen sind. Der elektromotorische Betrieb kann beispielsweise nach Unterschreiten des Lastanforderungsschwellenwerts oder nach einer vorbestimmten Zeitdauer wieder deaktiviert werden.

Das zweite Ausführungsbeispiel ist besonders für Nebenabtriebe geeignet, deren Lastanforderungen im Betrieb stark schwanken können, z. B. bei Tankfahrzeugen.

Gemäß einem dritten Ausführungsbeispiel wird der elektromotorische Betrieb des elektrifizierten Abgasturboladers aktiviert, wenn eine Steuervorrichtung eines am Nebenabtrieb angeschlossenen Nebenaggregats einen unmittelbar bevorstehenden Lastaufschaltvorgang über den Nebenabtrieb anzeigt. Hierbei ist der Begriff "anzeigt" nicht im visuellen Sinne zu verstehen, sondern dahingehend, dass die Steuervorrichtung des Nebenaggregats eingerichtet ist, eine Information, z. B. über eine Datenschnittstelle, bereitzustellen, wenn ein Lastaufschaltvorgang unmittelbar bevorsteht. Diese Information kann von einer Steuervorrichtung zur Ansteuerung des elektrifizierten Abgasturboladers ausgewertet werden, um ggf. den elektromotorischen Betrieb zu aktivieren. Dies bietet den Vorteil, dass der elektromotorische Betrieb des elektrifizierten Abgasturboladers bereits gestartet werden kann, bevor die Brennkraftmaschine mit der zusätzlichen Lastanforderung des Nebenabtriebs beaufschlagt wird, wodurch Drehzahleinbrüche noch wirksamer reduziert werden können.

Gemäß einer vorteilhaften Variante dieser Ausführungsform besteht die Möglichkeit, den elektromotorischen Betrieb des Abgasturboladers nur bei bestimmten Aufschaltvorgängen durchzuführen, falls z. B. das Nebenaggregat in Volllast betrieben wird oder falls aus der Information ableitbar ist, dass der Lastanforderungsschwellenwert und/oder der Differenzschwellenwert, wie vorstehend beschrieben, überschritten wird.

Gemäß einem vierten Ausführungsbeispiel wird der elektromotorische Betrieb des elektrifizierten Abgasturboladers aktiviert, solange eine Fahrpedalstellung einen Fahrpedalschwellenwert überschreitet und/oder wenn sich eine Fahrpedalstellung innerhalb einer vorgegebenen Zeitspanne um mehr als einen Differenzschwellenwert für die Änderung der Fahrpedalstellung erhöht. Dies ist an sich aus dem Stand der Technik bekannt und wird als sog. "Boost"-Betrieb des elektrifizierten Abgasturboladers bezeichnet. Hierbei wird dieser bei herkömmlichen, d. h. nicht vom Nebenabtrieb, sondern vom Fahrpedal resultierenden Lastanforderungen, aktiviert. Die Besonderheit dieses Ausführungsbeispiels liegt nun darin, dass der Fahrpedalschwellenwert und/oder der Differenzschwellenwert variabel vorgebbar ist und bei aktiviertem Nebenabtrieb verringert wird. Ein aktivierter Nebenabtrieb ist ein Nebenabtrieb, der ein- oder zugeschaltet ist und/oder eine Last anfordert. Dies bewirkt, dass der "Boost"-Betrieb des elektrifizierten Abgasturboladers in Betriebssituationen, in denen der Nebenabtrieb eine zusätzliche Lastanforderung an die Brennkraftmaschine stellt, früher, d. h. bereits bei einer verringerten Fahrpedalstellung und/oder einer verringerten Fahrpedaländerung, zugeschaltet wird. Dadurch kann der "Boost"-Betrieb automatisch an die geänderten Leistungsanforderungen bei aktiviertem Nebenabtrieb angepasst werden.

Ferner besteht im Rahmen der Erfindung die Möglichkeit, die Stärke des elektromotorischen Betriebs in Abhängigkeit von einer Höhe der über den Nebenabtrieb angeforderten Last bzw. Leistung festzulegen. Alternativ kann die elektrische Maschine des Abgasturboladers bei einer über den Nebenabtrieb angeforderten Last auch immer mit maximal zulässiger Leistung elektromotorisch betrieben werden.

Bei einer weiteren Variante der vorstehenden Ausführungsbeispiele, bei der der Nebenabtrieb ein motorabhängiger Nebenabtrieb ist, wird der elektromotorische Betrieb des elektrifizierten Abgasturboladers nur dann aktiviert, wenn sich das Kraftfahrzeug im Fahrbetrieb befindet. Im Fahrbetrieb, d. h. bei nicht stillstehendem Fahrzeug, sind nebenabtriebsbedingte Drehzahleinbrüche besonders störend, so dass gemäß dieser Variante der elektrifizierte Abgasturbolader nur im Fahrbetrieb zur Kompensation der zusätzlichen Lastanforderung des Nebenabtriebs eingesetzt wird. Als zusätzliche Aktivierungsbedingung zur Aktivierung des elektromotorischen Betriebs des elektrifizierten Abgasturboladers kann einer der Betriebszustände, die vorstehend für die ersten bis vierten Ausführungsbeispiele beschrieben wurden, verwendet werden.

Neben der hervorgehobenen Anwendung des elektromotorischen Betriebs der am Abgasturbolader angekoppelten elektrischen Maschine besteht im Rahmen der Erfindung jedoch auch die Möglichkeit, elektrifizierte Nebenabtriebsverbraucher durch einen generatorischen Betrieb des elektrifizierten Abgasturboladers mit elektrischer Energie teilzuversorgen. Durch den generatorischen Betrieb der am Abgasturbolader angekoppelten elektrischen Maschine kann aus der Bewegungsenergie des Läufers elektrische Energie rekuperiert und dem Fahrzeugbordnetz und/oder insbesondere dem elektrifizierten Nebenabtriebsverbraucher zugeführt werden. Mit anderen Worten kann die durch einen elektrifizierten Nebenabtriebsverbraucher zusätzlich angeforderte elektrische Energie zumindest teilweise durch den generatorischen Betrieb einer am Läufer des elektrifizierten Abgasturboladers angekoppelten elektrischen Maschine bereitgestellt werden.

Gemäß einem weiteren Gesichtspunkt der Erfindung wird eine Vorrichtung zur Ansteuerung des vorgenannten Antriebssystems des Kraftfahrzeugs, insbesondere eines Nutzfahrzeugs, bereitgestellt. Das Antriebssystem umfasst somit wiederum eine durch einen elektrifizierten Abgasturbolader aufgeladene Brennkraftmaschine und einen motorseitigen oder getriebeseitigen Nebenabtrieb. Die Vorrichtung ist ausgeführt, das erfindungsgemäße Verfahren wie in diesem Dokument offenbart auszuführen. Die Vorrichtung ist somit insbesondere ausgeführt, einen elektromotorischen Betrieb des elektrifizierten Abgasturboladers in Abhängigkeit von einem Betriebszustand des Nebenabtriebs, wie vorstehend beschrieben, zu aktivieren.

Die Erfindung betrifft ferner ein Kraftfahrzeug, insbesondere ein Nutzfahrzeug, mit einer Vorrichtung, wie hierin offenbart, zur Ansteuerung des Antriebssystems.

Zur Vermeidung von Wiederholungen sollen ferner rein verfahrensgemäß offenbarte Merkmale auch als vorrichtungsgemäß offenbart gelten und beanspruchbar sein. Weitere Einzelheiten und Vorteile der Erfindung werden im Folgenden unter Bezug auf die beigefügten Zeichnungen beschrieben. Es zeigen:
- Figur 1: ein schematisches Blockschaltbild zur Illustration eines Antriebssystems eines Kraftfahrzeugs mit einer aufgeladenen Brennkraftmaschine und einem motorseitigen Nebenabtrieb und einer Steuervorrichtung zur Ansteuerung des Antriebssystems gemäß einer Ausführungsform der Erfindung; und
- Figur 2: ein Ablaufdiagramm eines Verfahrens zur Ansteuerung des Antriebssystems aus Figur 1 gemäß einer Ausführungsform der Erfindung.

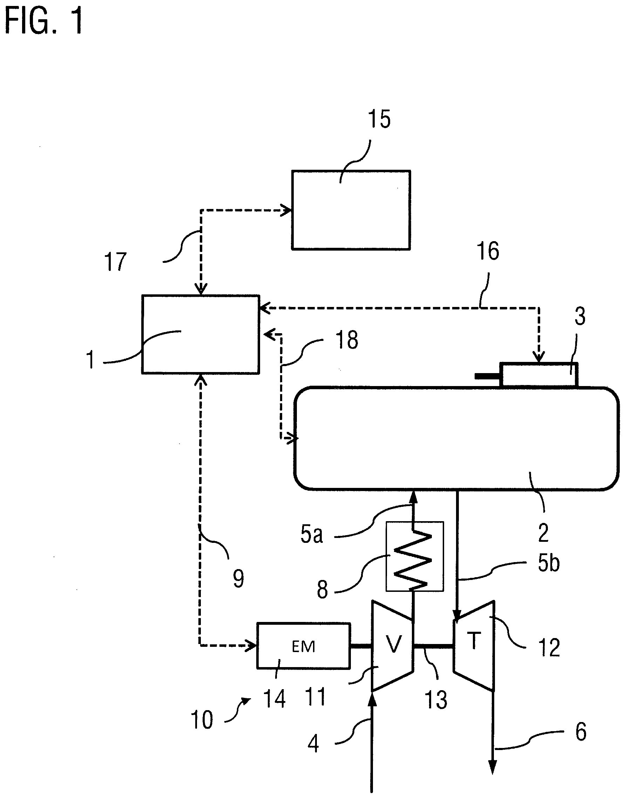

Figur 1 zeigt in Form eines stark schematisierten Blockschaltbildes ein Antriebssystem eines Nutzfahrzeugs. Das Antriebssystem umfasst eine aufgeladene Brennkraftmaschine 2, typischerweise einen Dieselmotor, und einen ihr zugeordneten elektrifizierten Abgasturbolader 10, nachfolgend auch als ATL bezeichnet. Der ATL 10 umfasst eine Turbine 12, die von einem Abgas der Brennkraftmaschine 2, das der Turbine 12 über die Abgasleitung 5b zugeführt wird, angetrieben wird. Danach strömt das Abgasgemisch über den Turbinenauslass in eine Abgasleitung 6 zum Auspuff und durchläuft dabei optional noch eine Abgasnachbehandlungseinrichtung (nicht dargestellt).

Die Turbine 12 ist durch eine Welle 13 mit einem Verdichter 11 verbunden. Dem Verdichter 11 wird über die Verdichtereinlassleitung 4 Frischluft zugeführt. Der Verdichter 11 verdichtet die der Brennkraftmaschine 2 zuzuführende Ladeluft und steigert somit die Leistung der Brennkraftmaschine 2 im normalen befeuerten Betrieb. Die durch den Verdichter 11 verdichtete Ladeluft wird über eine Ladeluftleitung einem Ladeluftkühler 8 zugeführt und anschließend über die Leitung 5a in die Brennkraftmaschine 2 eingespeist.

Der ATL 10 ist als elektrifizierter, d. h. als elektromotorisch unterstützter Abgasturbolader ausgeführt. Der ATL 10 ist hierzu mit einer motorisch und generatorisch betreibbaren elektrischen Maschine 14 versehen, die drehmomentübertragend mit der Antriebswelle 13 koppelbar bzw. gekoppelt ist und zum Antrieb bzw. zur Antriebsunterstützung des Läufers 11, 12, 13 des Abgasturboladers vorgesehen ist.

Der motorische und generatorische Betrieb der elektrischen Maschine 14, z. B. eines Elektromotors, wird von einer Steuervorrichtung 1 gesteuert, die hierzu über elektrische Leitungen mit dem Elektromotor 14 und mit einem Energiespeicher 15 für elektrische Energie, z. B. einer Starterbatterie oder einer Hochvoltbatterie eines hybridisierten Antriebsstrangs, verbunden ist, was durch die gepunkteten Linien 9 und 17 schematisch dargestellt ist. Für den motorischen Betrieb der elektrischen Maschine 14 wird dieser Energie von dem Energiespeicher 15 zugeführt. Der im generatorischen Betrieb der elektrischen Maschine 14 erzeugte Strom kann über die Steuervorrichtung 1 dem Energiespeicher 15 zugeführt werden.

In Figur 1 ist ferner, wiederum stark schematisiert, ein motorseitiger Nebenabtrieb 3 der Brennkraftmaschine 2 dargestellt.

Die Steuervorrichtung 1 ist in an sich bekannter Weise als Motorsteuerung zur Ansteuerung der Komponenten des Antriebssystems, insbesondere zur Ansteuerung der Brennkraftmaschine 2 und des Nebenabtriebs 3, ausgeführt. Hierzu ist die Steuervorrichtung über eine bidirektionale Signalleitung 18 mit der Brennkraftmaschine 2 und über eine bidirektionale Signalleitung 16 mit dem Nebenabtrieb 3 verbunden. Zur Steuerung des Nebenabtriebs 3 kann auch eine separate Steuervorrichtung vorgesehen sein.

Am Nutzfahrzeug, beispielsweise im Fahrerhaus, ist in an sich bekannter Weise ein Bedienelement (nicht dargestellt) vorgesehen, welches durch den Fahrer betätigt werden kann, wenn er das Einschalten des Nebenabtriebes wünscht. Das Bedienelement ist mit der Steuervorrichtung 1 verbunden, welche somit die Ansteuerung des Nebenabtriebes ermöglicht.

Es wird betont, dass die Erfindung nicht auf eine bestimmte konstruktive Ausgestaltung des Nebenantriebs beschränkt ist. Aus dem Stand der Technik ist eine Vielzahl unterschiedlicher Ausführungsvarianten zur motorseitigen und getriebeseitigen Anbringung einer Nebenantriebsschnittstelle bekannt.

Lediglich beispielhaft wird nachfolgend die Ausgestaltung eines möglichen Nebenabtriebs kurz erläutert. Die konstruktiven Details sind in der Figur 1 nicht dargestellt. Ist die Brennkraftmaschine 2 als Dieselmotor ausgeführt, bei dem die Zylinder und die Kurbelwelle von einem Kurbelgehäuse umgeben sind, kann sich an das Kurbelgehäuse abtriebsseitig ein Schwungradgehäuse anschließen, an das sich wiederum das Getriebe anschließt. Das Schwungradgehäuse umhaust in an sich bekannter Weise ein Schwungrad. Ferner ist im Bereich zwischen dem Kurbelgehäuse und dem Schwungrad ein Rädertrieb vorgesehen, der ebenfalls von einem Gehäuse, z. B. dem Schwungradgehäuse, umhaust ist. Der Rädertrieb ist eine Zahnradanordnung, die mit der Kurbelwelle und einer Nockenwelle kämmt und die ausgeführt ist, wenigstens ein weiteres Nebenaggregat anzutreiben, falls ein solches an den Rädertrieb angeschlossen wird. Im Bereich des Rädertriebs weist das Schwungradgehäuse einen Abtriebsflansch auf. Hierzu weist das Gehäuse an dieser Stelle eine mit einem Deckel verschließbare Gehäuseöffnung auf. Ist kein Nebenantriebsverbraucher an den Abtriebsflansch angeschlossen, ist das Gehäuse am Abtriebsflansch mit dem Deckel verschlossen. Ein Nebenabtriebsverbraucher kann in den Abtriebsflansch eingeschraubt werden und zum Einlegen in eine Stellung gebracht werden, in der dieser mit dem Rädertrieb kämmt.

Eine Besonderheit der erfindungsgemäßen Lehre liegt darin, dass die Steuervorrichtung 1 ferner eingerichtet ist, den Betrieb des ATLs 10 mit dem Betrieb des Nebenabtriebs 3 zu koordinieren. Hierzu ist die Steuervorrichtung 1 insbesondere ausgeführt, einen elektromotorischen Betrieb des elektrifizierten Abgasturboladers 10 in Abhängigkeit von einem Betriebszustand des Nebenabtriebs 3 zu aktivieren.

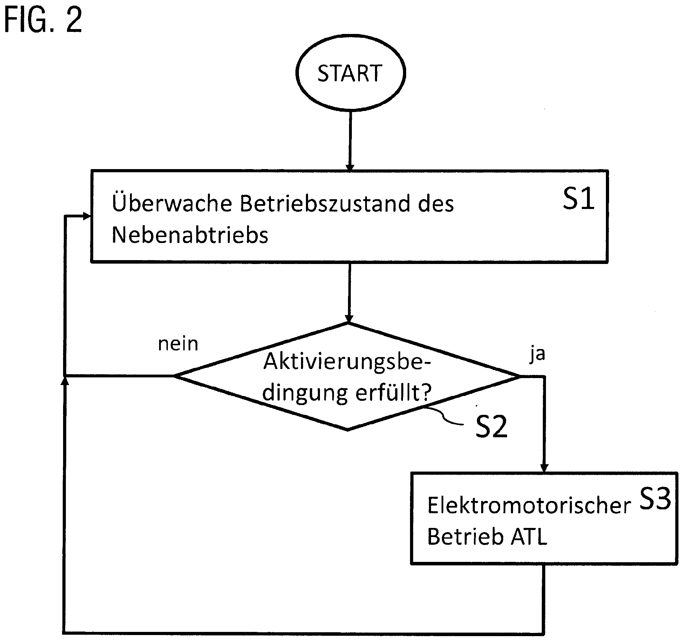

Die entsprechende Funktionsweise der Steuervorrichtung 1 und das korrespondierende Verfahren sind beispielhaft in dem Ablaufdiagramm der Figur 2 illustriert.

In Schritt S1 überwacht die Steuervorrichtung 1 fortlaufend den Betriebszustand des Nebenabtriebs 3. Beispielsweise kann die Steuervorrichtung 1 hierbei prüfen, ob der Nebenabtrieb 3 aktiviert ist. Je nach Ausführung des Nebenabtriebs kann hierbei überwacht werden, ob der Nebenabtrieb an die motorseitige oder getriebeseitige Anbindungsstelle angekoppelt ist und/oder eingeschaltet ist. Ferner besteht die Möglichkeit, den aktuellen Betriebszustand anhand der aktuell über den Nebenabtrieb angeforderten Leistung zu überwachen.

In Schritt S2 prüft die Steuervorrichtung dann anhand des ermittelten Betriebszustands des Nebenabtriebs 3, ob eine vorgegebene Aktivierungsbedingung erfüllt ist, die Betriebszustände des Nebenabtriebs angeben, bei denen der Nebenabtrieb ein- bzw. zugeschaltet ist oder bei denen die Lastanforderung und/oder der Lastanforderungsanstieg des Nebenabtriebs vorbestimmte Schwellenwerte überschritten hat oder zeitnah überschreiten wird, was nachfolgend noch erläutert wird.

Wenn die vorgegebene Aktivierungsbedingung nicht erfüllt ist, wird weiterhin mit der Überprüfung des Betriebszustandes des Nebenabtriebs in Schritt S1 fortgefahren.

Wenn die vorgegebene Aktivierungsbedingung erfüllt ist, wird in Schritt S3 der elektromotorische Betrieb des elektrifizierten Abgasturboladers 10 gestartet, d. h. die elektrische Maschine 14 wird motorisch betrieben und beschleunigt den Läufer 11, 12, 13 des ATLs 10, wodurch in der Brennkraftmaschine schneller ein Ladedruck aufgebaut wird. Durch den schnelleren Ladedruckaufbau kann schneller eine größere Kraftstoffmenge eingespritzt werden, um schneller die durch den Nebenabtrieb angeforderte erhöhte Leistung bereitzustellen. Auf diese Weise können Drehzahleinbrüche vermieden oder zumindest reduziert werden.

Wie vorstehend für unterschiedliche Ausführungsbeispiele beschrieben, kann es zweckmäßig sein, je nach Typ des Nebenabtriebs unterschiedliche Aktivierungsbedingungen vorab festzulegen.

Beispielsweise kann eine Aktivierungsbedingung, bei der der elektromotorische Betrieb des ATLs 10 aktiviert wird, sein, dass der Nebenabtrieb über ein Bedienelement vom Fahrer eingeschaltet wird. Der elektromotorische Betrieb des ATLs 10 wird wieder deaktiviert, wenn der Nebenantrieb wieder über das Bedienelement ausgeschaltet wird. Alternativ kann eine Aktivierungsbedingung sein, dass eine Lastanforderung des Nebenabtriebs einen vorbestimmten Lastanforderungsschwellenwert überschreitet und/oder dass die Lastanforderung des Nebenabtriebs innerhalb einer vorbestimmten Zeitspanne um mehr als einen vorbestimmten Differenzschwellenwert ansteigt. Gemäß einer weiteren Variante kann in Schritt S1 eine bereits vorhandene Aktivierungsbedingung für den elektromotorischen Betrieb des Abgasturboladers in Abhängigkeit vom Betriebszustand des Nebenabtriebs angepasst werden. Beispielsweise kann der elektromotorische Betrieb des elektrifizierten Abgasturboladers 10 auch bei deaktiviertem Nebenabtrieb im Rahmen eines bekannten "Boost"-Betriebs aktiviert werden, solange eine Fahrpedalstellung einen Fahrpedalschwellenwert überschreitet und/oder wenn sich eine Fahrpedalstellung innerhalb einer vorgegebenen Zeitspanne um mehr als einen Differenzschwellenwert erhöht. Gemäß dieser Variante kann der Fahrpedalschwellenwert und/oder der Differenzschwellenwert in Schritt S1 verringert werden, wenn im Rahmen der Überwachung des Nebenabtriebs 3 festgestellt wird, dass dieser eingeschaltet bzw. aktiviert ist. Gemäß dieser Variante werden dann bei der Prüfung in Schritt S2 verringerte Schwellenwerte zu Grunde gelegt, die zusätzliche Leistungsanforderungen an die Brennkraftmaschine bei aktiviertem Nebenabtrieb berücksichtigen, so dass der "Boost"-Betrieb früher zugeschaltet wird.

Die Erfindung ist nicht auf die vorstehend beschriebenen bevorzugten Ausführungsbeispiele beschränkt. Vielmehr ist eine Vielzahl von Varianten und Abwandlungen möglich.

### Bezugszeichenliste

- 1: Steuervorrichtung
- 2: Brennkraftmaschine
- 3: Nebenabtrieb
- 4: Verdichtereinlassleitung
- 5a: Verdichterauslassleitung bzw. Ladeluftleitung
- 5b: Turbineneinlassleitung
- 6: Turbinenauslassleitung
- 8: Ladeluftkühler
- 9: Elektrische Leitung
- 10: Elektrifizierter Abgasturbolader
- 11: Verdichter
- 12: Turbine
- 13: Antriebswelle
- 14: Elektrische Maschine
- 15: Speicher für elektrische Energie
- 16: Signalleitung
- 17: Elektrische Leitung
- 18: Signalleitung

## Patentansprüche

1. Verfahren zur Ansteuerung eines Antriebssystems eines Kraftfahrzeugs, insbesondere eines Nutzfahrzeugs, wobei das Antriebssystem eine durch einen elektrifizierten Abgasturbolader (10) aufgeladene Brennkraftmaschine (2) und einen motorseitigen oder getriebeseitigen Nebenabtrieb (3) aufweist, **dadurch gekennzeichnet,**
**dass** ein elektromotorischer Betrieb des elektrifizierten Abgasturboladers (10) in Abhängigkeit von einem Betriebszustand des Nebenabtriebs (3) aktiviert wird.

2. Verfahren nach Anspruch 1, **dadurch gekennzeichnet, dass** der elektromotorische Betrieb des elektrifizierten Abgasturboladers (10) aktiviert wird, wenn der Nebenabtrieb (3) über ein Bedienelement eingeschaltet wird.

3. Verfahren nach Anspruch 1, **dadurch gekennzeichnet, dass** der elektromotorische Betrieb des elektrifizierten Abgasturboladers (10) aktiviert wird,
(a) wenn eine Lastanforderung des Nebenabtriebs (3) einen vorbestimmten Lastanforderungsschwellenwert überschreitet; und/oder
(b) wenn eine Lastanforderung des Nebenabtriebs (3) innerhalb einer vorbestimmten Zeitspanne um mehr als ein vorbestimmter Differenzschwellenwert ansteigt.

4. Verfahren nach Anspruch 1 oder 3, **dadurch gekennzeichnet, dass** der elektromotorische Betrieb des elektrifizierten Abgasturboladers (10) aktiviert wird, wenn eine Steuervorrichtung (1) eines am Nebenabtrieb (3) angeschlossenen Nebenaggregats einen unmittelbar bevorstehenden Lastaufschaltvorgang über den Nebenabtrieb (3) anzeigt.

5. Verfahren nach einem der vorhergehenden Ansprüche, **dadurch gekennzeichnet,**
(a) **dass** der elektromotorische Betrieb des elektrifizierten Abgasturboladers (10) aktiviert wird, solange eine Fahrpedalstellung einen Fahrpedalschwellenwert überschreitet und/oder wenn sich eine Fahrpedalstellung innerhalb einer vorgegebenen Zeitspanne um mehr als einen Differenzschwellenwert für die Änderung der Fahrpedalstellung erhöht; und
(b) **dass** der Fahrpedalschwellenwert und/oder der Differenzschwellenwert für die Änderung der Fahrpedalstellung bei aktiviertem Nebenabtrieb (3) verringert wird.

6. Verfahren nach einem der vorhergehenden Ansprüche, **dadurch gekennzeichnet, dass** eine Stärke des elektromotorischen Betriebs in Abhängigkeit von einer Höhe der über den Nebenabtrieb (3) angeforderten Leistung festgelegt wird.

7. Verfahren nach einem der vorhergehenden Ansprüche, **dadurch gekennzeichnet,**
(a) **dass** der Nebenabtrieb (3) ein motorabhängiger Nebenabtrieb ist; und
(b) **dass** der elektromotorische Betrieb des elektrifizierten Abgasturboladers (10) nur aktiviert wird, wenn sich das Kraftfahrzeug im Fahrbetrieb befindet.

8. Vorrichtung zur Ansteuerung eines Antriebssystems eines Kraftfahrzeugs, insbesondere eines Nutzfahrzeugs, wobei das Antriebssystem eine durch einen elektrifizierten Abgasturbolader (10) aufgeladene Brennkraftmaschine (2) und einen motorseitigen oder getriebeseitigen Nebenabtrieb (3) aufweist, **dadurch gekennzeichnet, dass** die Vorrichtung ausgeführt ist, einen elektromotorischen Betrieb des elektrifizierten Abgasturboladers (10) in Abhängigkeit von einem Betriebszustand des Nebenabtriebs zu aktivieren.

9. Vorrichtung nach Anspruch 8, **dadurch gekennzeichnet, dass** die Vorrichtung ausgeführt ist, das Verfahren nach einem der Ansprüche 2 bis 7 auszuführen.

10. Kraftfahrzeug, insbesondere Nutzfahrzeug, mit einer Vorrichtung nach Anspruch 8 oder 9.

## Claims

1. Method for actuating a drive system of a motor vehicle, in particular a commercial vehicle, the drive system having an internal combustion engine (2) which is supercharged by way of an electrified exhaust gas turbocharger (10), and an engine-side or transmission-side power take-off (3), **characterized in that** electric motor operation of the electrified exhaust gas turbocharger (10) is activated in a manner dependent on an operating state of the power take-off (3).

2. Method according to Claim 1, **characterized in that** the electric motor operation of the electrified exhaust gas turbocharger (10) is activated when the power take-off (3) is switched on via an operating element.

3. Method according to Claim 1, **characterized in that** the electric motor operation of the electrified exhaust gas turbocharger (10) is activated
(a) when a load requirement of the power take-off (3) exceeds a predefined load request threshold value; and/or
(b) when a load requirement of the power take-off (3) rises by more than a predefined differential threshold value within a predefined time period.

4. Method according to Claim 1 or 3, **characterized in that** the electric motor operation of the electrified exhaust gas turbocharger (10) is activated when a control apparatus (1) of an auxiliary assembly which is connected to the power take-off (3) indicates an immediately imminent load connection operation via the power take-off (3).

5. Method according to one of the preceding claims, **characterized**
(a) **in that** the electric motor operation of the electrified exhaust gas turbocharger (10) is activated as long as an accelerator pedal position exceeds an accelerator pedal threshold value and/or if an accelerator pedal position is increased by more than a differential threshold value for the change in the accelerator pedal position within a predefined time period; and
(b) **in that** the accelerator pedal threshold value and/or the differential threshold value for the change in the accelerator pedal position are/is reduced when the power take-off (3) is activated.

6. Method according to one of the preceding claims, **characterized in that** a magnitude of the electric motor operation is fixed in a manner dependent on a level of the power output required via the power take-off (3).

7. Method according to one of the preceding claims, **characterized**
(a) **in that** the power take-off (3) is an engine-dependent power take-off; and
(b) **in that** the electric motor operation of the electrified exhaust gas turbocharger (10) is activated only when the motor vehicle is in driving operation.

8. Apparatus for actuating a drive system of a motor vehicle, in particular a utility vehicle, the drive system having an internal combustion engine (2) which is supercharged by way of an electrified exhaust gas turbocharger (10), and an engine-side or transmission-side power take-off (3), **characterized in that** the apparatus is configured to activate electric motor operation of the electrified exhaust gas turbocharger (10) in a manner dependent on an operating state of the power take-off.

9. Apparatus according to Claim 8, **characterized in that** the apparatus is configured to carry out the method according to one of Claims 2 to 7.

10. Motor vehicle, in particular a utility vehicle, having an apparatus according to Claim 8 or 9.

## Revendications

1. Procédé de commande d'un système d'entraînement d'un véhicule automobile, en particulier d'un véhicule utilitaire, dans lequel le système d'entraînement présente un moteur à combustion interne (2) suralimenté par un turbocompresseur à gaz d'échappement électrifié (10) et une prise de force secondaire (3) côté moteur ou côté boîte de vitesses, **caractérisé en ce que** l'on active un fonctionnement électro-motorisé du turbocompresseur à gaz d'échappement électrifié (10) en fonction d'un état de fonctionnement de la prise de force secondaire (3).

2. Procédé selon la revendication 1, **caractérisé en ce que** l'on active le fonctionnement électro-motorisé du turbocompresseur à gaz d'échappement électrifié (10) lorsque la prise de force secondaire (3) est enclenchée par un élément de commande.

3. Procédé selon la revendication 1, **caractérisé en ce que** l'on active le fonctionnement électro-motorisé du turbocompresseur à gaz d'échappement électrifié (10)
(a) lorsqu'une demande de charge de la prise de force secondaire (3) dépasse une valeur de seuil de demande de charge prédéterminée; et/ou
(b) lorsqu'une demande de charge de la prise de force secondaire (3) augmente pendant un laps de temps prédéterminé de plus d'une valeur de seuil de différence prédéterminée.

4. Procédé selon la revendication 1 ou 3, **caractérisé en ce que** l'on active le fonctionnement électro-motorisé du turbocompresseur à gaz d'échappement électrifié (10) lorsqu'un dispositif de commande (1) d'un groupe accessoire raccordé à la prise de force secondaire (3) indique une opération d'augmentation de charge directement imminente via la prise de force secondaire (3) .

5. Procédé selon l'une quelconque des revendications précédentes, **caractérisé en ce que**
(a) on active le fonctionnement électro-motorisé du turbocompresseur à gaz d'échappement électrifié (10) aussi longtemps que la position de la pédale des gaz dépasse une valeur de seuil de la pédale des gaz et/ou lorsqu'une position de la pédale des gaz augmente pendant un laps de temps prédéterminé de plus d'une valeur de seuil de différence pour le changement de la position de la pédale des gaz; et
(b) on diminue la valeur de seuil de la pédale des gaz et/ou la valeur de seuil de différence pour le changement de la position de la pédale des gaz lorsque la prise de force secondaire (3) est activée.

6. Procédé selon l'une quelconque des revendications précédentes, **caractérisé en ce que** l'on fixe une intensité du fonctionnement électro-motorisé en fonction d'un niveau de la puissance demandée par la prise de force secondaire (3).

7. Procédé selon l'une quelconque des revendications précédentes, **caractérisé en ce que**
(a) la prise de force secondaire (3) est une prise de force secondaire dépendant du moteur; et
(b) on n'active le fonctionnement électro-motorisé du turbocompresseur à gaz d'échappement électrifié (10) que lorsque le véhicule automobile se trouve en situation de roulage.

8. Dispositif de commande d'un système d'entraînement d'un véhicule automobile, en particulier d'un véhicule utilitaire, dans lequel le système d'entraînement présente un moteur à combustion interne (2) suralimenté par un turbocompresseur à gaz d'échappement électrifié (10) et une prise de force secondaire (3) côté moteur ou côté boîte de vitesses, **caractérisé en ce que** le dispositif est configuré de façon à activer un fonctionnement électro-motorisé du turbocompresseur à gaz d'échappement électrifié (10) en fonction d'un état de fonctionnement de la prise de force secondaire.

9. Dispositif selon la revendication 8, **caractérisé en ce que** le dispositif est configuré pour mettre en oeuvre le procédé selon l'une quelconque des revendications 2 à 7.

10. Véhicule automobile, en particulier véhicule utilitaire, équipé d'un dispositif selon la revendication 8 ou 9.
